# EUROPÄISCHE PATENTANMELDUNG

(11) **EP 1 111 848 A2**
(43) Veröffentlichungstag der Anmeldung: **27.06.2001**
(21) Anmeldenummer: 00127168.3
(22) Anmeldetag: 12.12.2000
(51) Int. Cl.: H04L 12/413, H04L 29/14

(54) **Vermittlungseinrichtung und Verfahren zur Vermittlung von Daten**

(30) Priorität: 17.12.1999 DE 19960953
(71) Anmelder: Tenovis GmbH & Co. KG, 60326 Frankfurt (DE)
(72) Erfinder: Schmidt, Werner, Dipl.-Ing., 63762 Grossostheim (DE)
(74) Vertreter: Bohnenberger, Johannes, Dr.

(57) **Zusammenfassung**

Es wird eine Vermittlungseinrichtung beziehungsweise ein Verfahren zur Vermittlung von Daten vorgeschlagen, die dazu dienen, mittels eines Zählers einen Zugriffswettbewerb auf einem Bussystem (1) der Vermittlungseinrichtung fairer zu gestalten und Übertragungsfehler von gesendeten Daten zu erkennen. Der Zugriffswettbewerb wird von einer Station (2, 4, 6) gewonnen, die ihre eigene Wettbewerbsnummer wieder empfängt. Für hoch priorisierte Daten wird ein besonderer Zugriffswettbewerb durchgeführt. Der Zähler wird nach der Priorität der zu sendenden Daten dekrementiert. Bei fehlender Rahmentaktsynchronisation versendet eine jeweilige Station (2, 4, 6) keine Daten. Eine Fehlersignalisierung wird aufgehoben, wenn nach einem Fehler wieder eine vorgegebene Zahl von fehlerfreien Rahmen empfangen wird. Werden jedoch weiterhin fehlerbehaftete Rahmen empfangen, wird ein Testzyklus durchgeführt. Führt auch der Testzyklus zu einem Fehler, wird das Bussystem (1) als fehlerhaft erkannt, und es wird die Kommunikation über das Bussystem (1) eingestellt und gegebenenfalls auf ein redundantes Bussystem umgeschaltet.

## Beschreibung

### Stand der Technik

Die Erfindung betrifft eine Vermittlungseinrichtung beziehungsweise ein Verfahren zum Vermitteln von Daten nach der Gattung der unabhängigen Patentansprüche.

Es ist bereits aus der Offenlegungsschrift DE 43 04 187 A1 bekannt, daß ein Verfahren zur Beschleunigung des Zugriffswettbewerbs für an ein Bussystem angeschlossene Stationen in Vermittlungseinrichtungen mittels Wettbewerbsnummern, die ganz oder teilweise auf mehrere Zugriffsleitungen geschaltet werden, implementiert werden kann. Eine an das Bussystem angeschlossene Station stellt fest, ob eine sich auf den Zugriffsleitungen befindliche Wettbewerbsnummer größer oder kleiner als die von ihr gesendete Wettbewerbsnummer ist. Ist sie größer, wird die entsprechende Station sofort aus dem Zugriffswettbewerb ausgeschlossen.

### Vorteile der Erfindung

Die erfindungsgemäße Vermittlungseinrichtung beziehungsweise das erfindungsgemäße Verfahren zur Vermittlung von Daten haben demgegenüber den Vorteil, daß mittels eines Zählers, den jede Station aufweist und der pro gewonnenem Zugriffswettbewerb dekrementiert wird, ein fairer Wettbewerb ermöglicht wird. Es wird damit vorteilhafterweise erreicht, daß eine Station, die sehr viele hoch priorisierte Daten sendet und damit ihren Zähler sehr rasch dekrementiert, irgendwann nicht mehr senden kann, so daß auch andere Stationen, die möglicherweise niedriger priorisierte Daten zu versenden haben, ihre Daten über das Bussystem versenden können, da die Station aufgrund ihres nicht mehr positiven Zählers nicht mehr an Zugriffswettbewerben teilnehmen kann. Damit wird erreicht, daß auch schließlich niedrig priorisierte Daten über das Bussystem vermittelt werden können.

Weiterhin ermöglicht die erfindungsgemäße Vermittlungseinrichtung beziehungsweise das erfindungsgemäße Verfahren zum Vermitteln von Daten die Ermittlung und Behandlung von Übertragungsfehlern, wobei sowohl Daten als auch Steuerinformationen auf Übertragungsfehler getestet werden. Damit überprüft sich die Vermittlungseinrichtung selbst, ob sie weiterhin in der Lage ist, fehlerfrei Daten zu vermitteln. Dies ist für einen vorteilhaften Betrieb und für einen bedienerfreundlichen Service von großem Nutzen. Servicetechnikern kann damit beispielsweise ein fehlerhaftes Bussystem angezeigt werden.

Weiterhin ermöglicht die Synchronisation der an das Bussystem angeschlossenen Stationen eine einfache und zentrale Behandlung der Vermittlung der Daten.

Durch die in den abhängigen Ansprüchen aufgeführten Maßnahmen und Weiterbildungen sind vorteilhafte Verbesserungen und Erweiterungen der in den unabhängigen Patentansprüchen angegebenen Vermittlungseinrichtung bzw. des in den unabhängigen Patentansprüchen angegebenen Verfahrens zur Vermittlung von Daten möglich.

Besonders von Vorteil ist, daß eine an das Bussystem angeschlossene Station, die an einem Zugriffswettbewerb teilnimmt, einen Sieg in einem Zugriffswettbewerb daran erkennt, daß sie ihre eigene Wettbewerbsnummer wieder empfängt. Dies ist eine sehr einfache Methode der Ermittlung eines Siegers in einem Zugriffswettbewerb, da, wenn eine Station ihre eigene Wettbewerbsnummer empfängt, sich alle anderen Stationen, die auf dem Übertragungsweg der Wettbewerbsnummer sind, sich dann aus dem Zugriffswettbewerb zurückgezogen haben.

Weiterhin ist es von Vorteil, daß hoch priorisierte Daten einen besonderen Zugriffswettbewerb signalisieren und durchführen. Damit wird für solche Daten, die insbesondere für eine Zeitverzögerung empfindlich sind, eine rasche Vermittlung garantiert. Dies erhöht die Übertragungsqualität der vermittelten Daten.

Darüber hinaus ist es von Vorteil, daß die Zähler nach der Priorität dekrementiert werden. Insbesondere für hoch priorisierte Daten werden die Zähler weniger dekrementiert als für niedrig priorisierte Daten. Dies führt vorteilhafterweise dazu, daß hoch priorisierte Daten bei den Übertragungen bevorzugt werden, da sie zu einem langsameren Abbau der Zähler führen, während niedrig priorisierte Daten zu einem schnelleren Abbau eines jeweiligen Zählers führen. Damit werden niedrig priorisierte Daten benachteiligt, da sie gegenüber Zeitverzögerungen wesentlich unempfindlicher als beispielsweise isochrone und damit hoch priorisierte Daten sind.

Weiterhin ist es von Vorteil, daß eine Station bei fehlender Synchronisation keine Daten überträgt und es so vermieden wird, daß nicht synchronisierte Daten übertragen werden. Dies vereinfacht die Datenvermittlung in einer Vermittlungseinrichtung.

Darüber hinaus ist es von Vorteil, daß eine Fehlersignalisierung nach einer vorgegebenen Zahl von fehlerfrei empfangenen Rahmen wieder aufgehoben wird, und falls dies nicht der Fall ist, daß dann ein Testzyklus durchgeführt wird. Dadurch wird eine geeignete Reaktion der Vermittlungseinrichtung auf detektierte Übertragungsfehler ermöglicht.

Des weiteren ist es von Vorteil, daß eine Vermittlungseinrichtung bei weiterhin auftretenden Fehlern auf dem Bussystem den Zugang zu dem Bussystem abschaltet oder auf ein möglicherweise vorhandenes redundantes Bussystem umschaltet, um dort die Vermittlung der Daten weiterzuführen.

Vorteilhafterweise werden die Adressen von Datenpaketen beim Verbindungsaufbau in Speichern der an das Bussystem angeschlossenen Stationen sortiert abgespeichert, wobei die Adressen gegebenenfalls in Segmente aufgeteilt werden. Damit wird einerseits eine binäre Suche ermöglicht und andererseits werden Adressen segmentweise gesucht. Das beschleunigt die Adreßverarbeitung der Stationen.

### Zeichnung

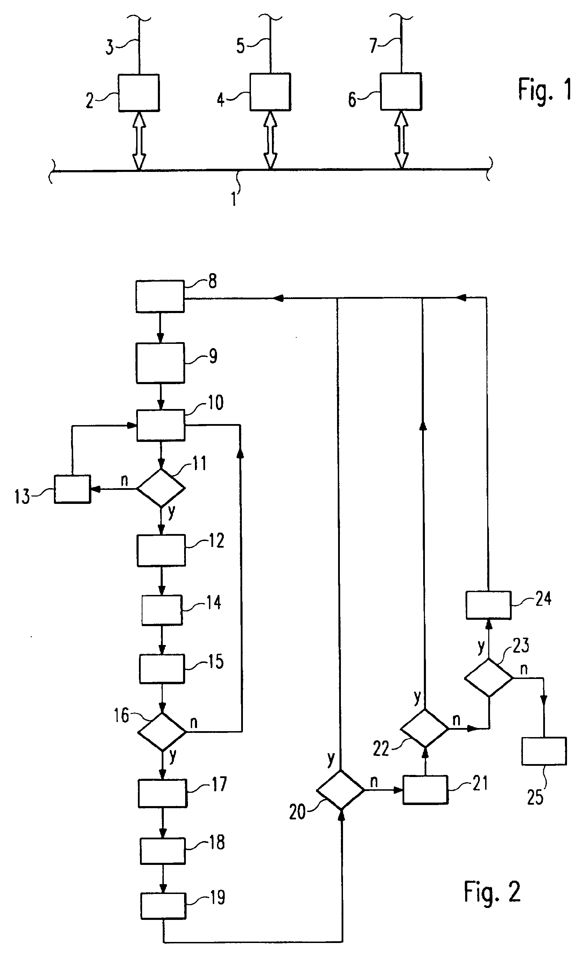

Ausführungsbeispiele sind in der Zeichnung dargestellt und werden in der Beschreibung näher erläutert. Es zeigen Figur 1 eine erfindungsgemäße Vermittlungseinrichtung und Figur 2 ein erfindungsgemäßes Verfahren zur Vermittlung von Daten.

### Beschreibung

Vermittlungseinrichtungen für z.B. ATM (Asynchronous Transfer Mode) weisen ein Bussystem auf, über das angeschlossene Stationen, die mit Datenleitungen verbunden sind, auf denen Daten zu der Vermittlungseinrichtung übertragen werden und von der Vermittlungseinrichtung versendet werden, diese Daten zwischen den Stationen übertragen. Die Daten werden also vermittelt. Da auf solch einem Bussystem zu einem Zeitpunkt nur eine Station Daten übertragen kann, wird mittels eines Zugriffswettbewerbs ermittelt, welche Station sendeberechtigt ist. Die Sendeberechtigung richtet sich nach einer Priorität der Daten, die zu übertragen sind. Es gibt verschiedene Arten von Daten, die je nach ihrer Übertragungsart verschiedene Prioritäten zugewiesen bekommen.

ATM ist eine weit verbreitete Vermittlungstechnik zur Vermittlung von digitalen Daten, wobei die Daten in Zellen von 53 Byte Länge aufgeteilt werden. In der Beschreibung wird der Begriff Datenpaket als Synonym für den Begriff Zelle verwendet.

Erfindungsgemäß wird daher eine Vermittlungseinrichtung mit einem Zähler für jede Station einer Detektion von Übertragungsfehlern und einer Synchronisation der Stationen auf einen Rahmentakt verwendet. Auf jeder Station, die an das Bussystem angeschlossen ist, läuft dann entsprechend das erfindungsgemäße Verfahren zur Vermittlung von Daten. Die Daten sind isochrone und ATM-Daten. Der Zähler wird von der jeweiligen Station abgespeichert.

In Figur 1 ist die erfindungsgemäße Vermittlungseinrichtung dargestellt. An ein Bussystem 1 sind über Datenein-/ausgänge Stationen 2, 4 und 6 angeschlossen. An der Station 2 ist eine Datenleitung 3 angeschlossen, während an die Station 4 eine Datenleitung 5 angeschlossen ist. Schließlich weist die Station 6 eine Verbindung zur Datenleitung 7 auf. Daß hier lediglich drei Stationen dargestellt sind, ist rein beispielhaft. Es können mehr oder auch weniger sein. Eine Station kann auch mit mehreren Datenleitungen verbunden sein.

Auf den Stationen 2, 4 und 6 läuft das erfindungsgemäße Verfahren zur Vermittlung von Daten ab. Figur 2 zeigt dieses Verfahren.

Im Verfahrensschritt 8 wartet die jeweilige Station 2, 4 oder 6 auf Datenempfang über die angeschlossenen Datenleitungen 3, 5 oder 7. Werden Daten empfangen, wird dann in Verfahrensschritt 9 eine Adreßauswertung der empfangenen Datenpakete durchgeführt, dabei wird die für die Übertragung auf dem Bussystem benötigte Steuerinformation ermittelt und gegebenenfalls die empfangene Adresse durch eine andere Adresse ersetzt. Die Adreßauswertung wird derart ausgeführt, daß in einem zu der Station gehörigen Speicher nach entsprechenden Einträgen gesucht wird, die dann die Informationen enthalten, die den Datenpaketen zugeordnet sind. Solche Informationen sind Adreßübersetzungen und/oder Routinginformationen, aber auch weitere Informationen sind möglich. Findet die Station keine Übereinstimmung zwischen der Adresse der Daten und den im Speicher abgelegten Adressen, dann ignoriert die Station diese Daten. Die Adressen und zugeordneten Informationen wurden zunächst während des Verbindungsaufbaus in den Speichern der an der Verbindung beteiligten Stationen abgelegt. Sind die Adressen länger als eine Speicherzelle, werden die Adressen in Segmente aufgeteilt, so daß dann die Adressen segmentweise überprüft werden. Dies führt vorteilhafterweise zu einer binären Suche, die es ermöglicht, daß nicht alle Adreßeinträge überprüft werden müssen, insbesondere dann, wenn die Adreßsegmente sortiert abgespeichert werden.

Die Steuerinformation wird dem Datenpaket vorangestellt, d.h. eine sendende Station versendet nach gewonnenem Zugriffswettbewerb ihre Daten, ohne zu wissen, welche Station oder Stationen die Daten empfangen werden. Die Daten werden auf dem Bussystem 1 in Datenpaketen versendet. Das Bussystem ist hier als elektrisches Leitungssystem ausgebildet. Alternativ ist ein optisches Leitungssystem und ein funkbasierter Bus möglich.

Dabei führt eine empfangende Station die Auswertung der Steuerinformation aus. Findet sie einen entsprechenden Eintrag in einem zugeordneten Speicher, so wird das empfangene Datenpaket weiter bearbeitet, ansonsten wird es ignoriert. Weiter während des Verbindungsaufbaus zugeordnete Informationen dienen dazu, den beziehungsweise die Ausgänge zu bestimmen und eventuell zusätzlich zur sendeseitigen Adress-Umsetzung hier auch die enthaltenen Adressinformationen ganz oder teilweise durch andere Informationen zu ersetzen.

Wird nun die Adresse zu Beginn der Daten eingefügt, dann wird in Verfahrensschritt 10 ein Zugriffswettbewerb initialisiert.

Der Zugriffswettbewerb auf dem Bussystem 1 wird an vorgegebenen Stellen eines Rahmens durchgeführt, wobei die Datenübertragung über das Bussystem in einem Rahmentakt vorgenommen wird. Damit ist gewährleistet, daß in jedem Rahmen ein Zugriffswettbewerb durchgeführt werden kann.

In Verfahrensschritt 11 wird dann jedoch festgestellt, ob der zu der Station gehörige Zähler angibt, ob die Station überhaupt noch an einem Zugriffswettbewerb teilnehmen darf. Dies ist nur dann der Fall, wenn der Zähler noch positiv ist. Ist das nicht der Fall, dann wird in Verfahrensschritt 13 gewartet, bis der Zähler wieder auf den ursprünglichen Wert zurückgesetzt wird. Dies tritt dann ein, wenn entweder keine Station mehr senden kann oder will. Dann wird in Verfahrensschritt 10 zurückgesprungen, um dann schließlich in Verfahrensschritt 11 festzustellen, daß der Zähler nun positiv ist. Ist das dann der Fall, wird in Verfahrensschritt 12 eine Wettbewerbsnummer gesendet.

Jede Station vergleicht ihre gesendete Wettbewerbsnummer mit einer auf dem Bussystem 1 befindlichen Codierung. Ist die Codierung größer als die gesendete Wettbewerbsnummer, dann zieht sich die jeweilige Station sofort aus dem Zugriffswettbewerb zurück. Damit wird am Ende des Zugriffswettbewerbs die Station mit der höchsten Wettbewerbsnummer diesen Wettbewerb gewinnen und kann ihre Daten versenden. Die Wettbewerbsnummern sind so beschaffen, daß eine Überlagerung von mehreren Wettbewerbsnummern nicht zu einer weiteren Wettbewerbsnummer führt. Weiterhin ist bei einer Überlagerung von Wettbewerbsnummern erkennbar, ob eine Wettbewerbsnummer einer Station größer oder kleiner als die größte der sich überlagernden Wettbewerbsnummern ist.

Empfangene Steuerinformationen, zu denen auch die Wettbewerbsnummern gehören, werden von jeder Station auf ihre Richtigkeit hin überprüft. Dies wird einerseits damit durchgeführt, daß beispielsweise Wettbewerbsnummern auf zulässige Bit - Muster kontrolliert werden und dies in ihrer Gesamtheit als auch in ihrer zeitlichen Abfolge. Dies wird in Verfahrensschritt 14 festgestellt. Ein Fehler wird signalisiert und später wird eine entsprechende Reaktion veranlaßt, die unten beschrieben ist.

In Verfahrensschritt 15 wird der durchgeführte Zugriffswettbewerb ausgewertet. In Verfahrensschritt 16 wird dann ermittelt, ob der Zugriffswettbewerb von der Station gewonnen wurde oder nicht. Ist das nicht der Fall, so wird in Verfahrensschritt 10 erneut am nächsten Zugriffswettbewerb teilgenommen.

Wird der Zugriffswettbewerb gewonnen, dann wird in Verfahrensschritt 17 das Senden der zu vermittelnden Datenpakete begonnen. Die empfangenden Stationen führen dann die oben beschriebene Adreßauswertung durch, um zu überprüfen, welche Datenpakete von der Station empfangen und verarbeitet werden müssen. In Verfahrensschritt 18 wird entsprechend der Priorität der gesendeten Datenpakete der Zähler der siegreichen Station dekrementiert.

Dann wird in Verfahrenschritt 19 überprüft, ob die gesendeten Daten Übertragungsfehler aufweisen. Dies wird so durchgeführt, daß die gesendeten Datenpakete solange von der Station gepuffert werden, bis diese Datenpakete wieder empfangen werden, so daß dann ein einfacher Vergleich dazu führt, Übertragungsfehler zu ermitteln. Dafür ist beispielsweise ein einfacher Logikschaltkreis dienlich.

In Verfahrensschritt 20 wird dann festgestellt, ob diese Überprüfung zu Übertragungsfehlern geführt hat oder nicht. Zusätzlich wird auch berücksichtigt, ob die Steuersignale Übertragungsfehler aufweisen, wie es oben beschrieben wurde. Waren die Überprüfung und die Steuersignale in Ordnung, dann wird in Verfahrensschritt 8 erneut darauf gewartet, Daten zu empfangen.

Wiesen die Überprüfung und die Steuersignale jedoch Fehler auf, dann wird in Verfahrensschritt 21 ein Testzyklus durchgeführt, um noch einmal zu überprüfen, ob die Übertragungsfehler erneut auftreten. In Verfahrensschritt 22 wird dann festgestellt, ob auch dieser Testzyklus zu einem positiven oder negativen Ergebnis geführt hat. War dieser Testzyklus positiv, dann wird in Verfahrensschritt 8 erneut auf Datenempfang gewartet. Während des Testzyklus wird ein entsprechendes Bitmuster gesendet, um dann das gesendete und das empfangene Bitmuster zu versenden.

War der Testzyklus negativ, dann wird in Verfahrensschritt 23 überprüft, ob ein redundantes Bussystem, vorliegt oder nicht. Liegt ein redundantes Bussystem vor, wird in Verfahrensschritt 24 ein Umschalten auf dieses redundante Bussystem signalisiert und durchgeführt, um dann in Verfahrensschritt 8 mit dem Datenempfang fortzufahren. Liegt jedoch kein redundantes Bussystem vor, wird in Verfahrensschritt 25 signalisiert, die Vermittlung der Daten einzustellen, da offensichtlich das Bussystem 1 fehlerhaft und keine sichere Vermittlung der Daten mehr möglich ist. Daher wird der Zugang zu dem fehlerhaften Bussystem abgeschaltet.

In einer Weiterbildung der Erfindung ist vorgesehen, daß, wenn eine Station einen fehlerhaften Rahmen erkannt und dies signalisiert hat, die Station nach einer vorgegebenen Zahl von fehlerfrei empfangenen Rahmen die Fehlersignalisierung wieder aufhebt. Die Fehlersignalisierung wird auch aktiv, wenn Steuersignale als fehlerhaft erkannt wurden. Empfängt die Station jedoch weiterhin fehlerbehaftete Rahmen beziehungsweise fehlerhafte Steuersignale, dann wird der Testzyklus durchgeführt.

Gelingt es einer Station nicht, auf den Rahmentakt zu synchronisieren oder verliert sie die Rahmentaktsynchronisation, ist es dieser Station nicht mehr erlaubt, Daten zu versenden, so daß nur im Rahmentakt gesendete Daten über das Bussystem 1 übertragen werden.

## Patentansprüche

1. Vermittlungseinrichtung mit einem Bussystem (1), wobei Stationen (2, 4, 6 ) an das Bussystem (1) angeschlossen sind, wobei die Stationen (2, 4, 6 ) einen Zugriffswettbewerb durchführen, in dem jede sendewillige Station eine Wettbewerbsnummer auf das Bussystem (1) schaltet und die Station (2, 4, 6) mit der größten Wettbewerbsnummer den Zugriffswettbewerb gewinnt, dadurch gekennzeichnet, daß jede Station (2, 4, 6) einen Zähler in einem Speicher aufweist, wobei die jeweilige Station (2, 4, 6) Mittel aufweist, um für gewonnene Zugriffswettbewerbe den Zähler zu dekrementieren, daß jede Station (2, 4, 6) Mittel aufweist, um zu ermitteln, ob der zur Station (2, 4, 6) gehörige Zähler einen positiven Wert aufweist, so daß in diesem Fall die jeweilige Station (2, 4, 6) noch am Zugriffswettbewerb teilnimmt, daß die Stationen (2, 4, 6) Mittel aufweisen, die Zähler auf den Ursprungswert zurückzusetzen, wenn keine Stationen (2, 4, 6) mehr Daten übertragen, daß jede Station (2, 4, 6) Mittel aufweist, eine Fehlerdetektion für gesendete und empfangene Daten durchzuführen, daß jede Station (2, 4, 6) Mittel aufweist, eine Überprüfung der Steuerinformation auf Übertragungsfehler vorzunehmen, und daß jede Station (2, 4, 6) Mittel zur Synchronisation auf einen Rahmentakt aufweist.

2. Vermittlungseinrichtung nach Anspruch 1 dadurch gekennzeichnet, daß die Vermittlungseinrichtung ein redundantes Bussystem aufweist.

3. Verfahren zur Vermittlung von Daten, wobei Daten über ein Bussystem vermittelt werden, wobei an das Bussystem (1) angeschlossene Stationen (2, 4, 6) einen Zugriffswettbewerb durchführen, in dem jede sendewillige Station (2, 4, 6) eine Wettbewerbsnummer auf das Bussystem (1) schaltet und die Station (2, 4, 6) mit der größten Wettbewerbsnummer den Zugriffswettbewerb gewinnt, dadurch gekennzeichnet, daß jeder Station (2, 4, 6) ein Zähler zugeordnet wird, der für gewonnene Zugriffswettbewerbe dekrementiert wird, daß jeder Station (2, 4, 6) nur solange erlaubt wird, an Zugriffswettbewerben teilzunehmen, wie der zur Station (2, 4, 6) zugehörige Zähler einen positiven Wert ausweist, daß die Zähler auf den Ursprungswert zurückgesetzt werden, wenn keine Stationen (2, 4, 6) mehr Daten übertragen, daß von jeder Station (2, 4, 6) eine Fehlerdetektion für gesendete und empfangene Daten durchgeführt wird, daß von jeder Station (2, 4, 6) eine Überprüfung der Steuerinformation auf Übertragungsfehler vorgenommen wird, und daß jede Station (2, 4, 6) auf den Rahmentakt synchronisiert wird.

4. Verfahren nach Anspruch 3, dadurch gekennzeichnet, daß der Zugriffswettbewerb während eines vorgegebenen Teils eines Rahmens durchgeführt wird und daß der Zugriffswettbewerb von der Station (2, 4, 6) gewonnen wird, die ihre eigene gesendete Wettbewerbsnummer wieder empfängt.

5. Verfahren nach Anspruch 4, dadurch gekennzeichnet, daß für hoch priorisierte Daten ein besonderer Zugriffswettbewerb signalisiert und durchgeführt wird.

6. Verfahren nach Anspruch 5, dadurch gekennzeichnet, daß die Zähler der Station (2, 4, 6) nach der Priorität der vermittelten Daten dekrementiert wird.

7. Verfahren nach Anspruch 6, dadurch gekennzeichnet, daß, wenn nicht auf den Rahmentakt synchronisiert wird, von der jeweiligen Station (2, 4, 6) keine Daten versendet werden.

8. Verfahren nach Anspruch 7, dadurch gekennzeichnet, daß Adressen von Datenpaketen sortiert abgespeichert werden, wobei die Adressen gegebenenfalls in Segmente aufgeteilt und abgespeichert werden.

9. Verfahren nach Anspruch 8, dadurch gekennzeichnet, daß den Adressen Informationen, vorzugsweise Adreßübersetzungen und Routinginformationen, zugeordnet werden.
